# EUROPEAN PATENT APPLICATION

(11) **EP 4 138 011 A1**
(43) Date of publication of application: **22.02.2023**
(21) Application number: 21788672.0
(22) Date of filing: 30.03.2021
(51) Int. Cl.: G06Q 10/08

(54) **EX-WAREHOUSE CONTROL METHOD, DEVICE AND SYSTEM**

(30) Priority: 16.04.2020 CN 202010300721
(71) Applicant: Beijing Jingdong Zhenshi Information Technology Co., Ltd., Beijing, Beijing 100086 (CN)
(72) Inventor: HAO, Guowei, Beijing 100086 (CN); SONG, Baifan, Beijing 100086 (CN)
(74) Representative: Mewburn Ellis LLP
(86) International application number: PCT/CN2021/083735
(87) International publication number: WO 2021/208713

(57) **Abstract**

Disclosed are an ex-warehouse control method, device and system. A particular embodiment of the method comprises: receiving an ex-warehouse request, wherein the ex-warehouse request comprises a seller identifier, an order amount and a platform identifier; acquiring information of a seller according to the seller identifier, wherein the information comprises an inventory supervision starting point value and a total inventory amount; if the difference between the total inventory amount and the order amount is less than the inventory supervision starting point value, determining whether the platform identifier is an unlimited platform identifier; if the platform identifier is the unlimited platform identifier, sending a pre-generated appointment code to a wallet server so as to query the validity of the appointment code; and in response to the reception of a validity confirmation message sent by the wallet server, performing automatic repayment according to the order amount and then sending an ex-warehouse instruction to an inventory server. By means of the embodiment, the inventory supervision security can be ensured, and the circulation of goods is also not influenced.

## Description

The present patent application claims priority to Chinese Patent Application No. 202010300721.X titled "EX-WAREHOUSE CONTROL METHOD, DEVICE AND SYSTEM" filed on April 16, 2020, the full text of which is incorporated herein by reference.

### TECHNICAL FIELD

Embodiments of the present disclosure relate to the field of computer technology, and more particularly, to an ex-warehousing control method, apparatus, and system.

### BACKGROUND

Ex-warehousing control in a supply chain and logistics system may exist in many business application scenarios. Generally, in a conventional ex-warehousing control logic, inventory details are directly freezed according to an instruction of an external system. After freezing, substantial supervision can be performed on the inventory, and a security of the ex-warehousing control is ensured.

In existing technologies, a great disadvantage lies in that items supervised in the system cannot be shipped out, and inventory turnover of a vendor of the items is affected.

### SUMMARY

Embodiments of the present disclosure provide an ex-warehousing control method, apparatus, and system.

According to a first aspect, an embodiment of the present disclosure provides an ex-warehousing control method, including: receiving an ex-warehousing request, wherein the ex-warehousing request includes a vendor identification, an order amount, and a platform identification; acquiring vendor information according to the vendor identification, wherein the vendor information includes a starting value of inventory supervision, and a total inventory; in a case that a difference between the total inventory and the order amount is less than the starting value of inventory supervision, determining whether the platform identification is an unlimited platform identification; in a case that the platform identification is the unlimited platform identification, sending a pre-generated contract code to a wallet server to check a validity of the contract code; and in response to receiving a validity confirmation message sent by the wallet server, performing automatic repayment according to the order amount and sending an ex-warehousing instruction to the inventory server.

In some embodiments, the ex-warehousing request further comprises an item identification; and performing automatic repayment according to the order amount includes: calculating a realized value of items involved in the ex-warehousing request according to the item identification and a preset realized price list; sending a money-deduction request to the wallet server; updating the starting value of inventory supervision according to the order amount; and updating the total inventory according to the realized value.

In some embodiments, the method further comprises: in a case that the difference between the total inventory and the order amount is not less than the starting value of inventory supervision, sending the ex-warehousing instruction to the inventory server to update the total inventory.

In some embodiments, the method further comprises: in a case that the platform identification is the limited platform identification, sending an ex-warehousing failure message to the vendor server.

In some embodiments, the method further comprises: in response to receiving a validity-disproved message sent by the wallet server, sending the ex-warehousing failure message to the vendor server.

In some embodiments, the method further comprises: in response to receiving a repayment request including a repayment amount sent by the wallet server, updating the starting value of inventory supervision according to the repayment amount.

In some embodiments, before receiving the ex-warehousing request, the method further comprises receiving a supervision request including a supervision amount from a vendor server; obtaining an inventory item list from an inventory server; calculating an initial value of the total inventory according to a preset realization price list and the inventory item list; and setting an initial value of the starting value of inventory supervision according to the supervision amount.

In some embodiments, the method further comprises: in response to detecting that the starting value of inventory supervision is less than a predetermined threshold, cancelling supervision of the vendor server so that the vendor server directly sends the ex-warehousing instruction to the inventory server.

According to a second aspect, an embodiment of the present disclosure provides an ex-warehousing control apparatus, including: a receiving unit configured to receive an ex-warehousing request, wherein the ex-warehousing request includes a vendor identification, an order amount, and a platform identification; an acquiring unit configured to acquire vendor information according to the vendor identification, wherein the vendor information includes a starting value of inventory supervision, and a total inventory; a determining unit configured to, in a case that a difference between the total inventory and the order amount is less than the starting value of inventory supervision, determine whether the platform identification is an unlimited platform identification; a querying unit configured to, in a case that the platform identification is the unlimited platform identification, send a pre-generated contract code to a wallet server to check a validity of the contract code; and a controlling unit configured to, in response to receiving a validity confirmation message sent by the wallet server, perform automatic repayment according to the order amount and send an ex-warehousing instruction to the inventory server.

In some embodiments, the ex-warehousing request further comprises an item identification; and the controlling unit is further configured to: calculate a realized value of items involved in the ex-warehousing request according to the item identification and a preset realized price list; send a money-deduction request to the wallet server; update the starting value of inventory supervision according to the order amount; and update the total inventory according to the realized value.

In some embodiments, the controlling unit is further configured to: in a case that the difference between the total inventory and the order amount is not less than the starting value of inventory supervision, send the ex-warehousing instruction to the inventory server to update the total inventory.

In some embodiments, the controlling unit is further configured to: in a case that the platform identification is the limited platform identification, send an ex-warehousing failure message to the vendor server.

In some embodiments, the controlling unit is further configured to: in response to receiving a validity-disproved message sent by the wallet server, send the ex-warehousing failure message to the vendor server.

In some embodiments, the controlling unit is further configured: in response to receiving a repayment request including a repayment amount sent by the wallet server, update the starting value of inventory supervision according to the repayment amount.

In some embodiments, the controlling unit is further configured to: receive a supervision request including a supervision amount from a vendor server; obtain an inventory item list from an inventory server; calculate an initial value of the total inventory according to a preset realization price list and the inventory item list; and set an initial value of the starting value of inventory supervision according to the supervision amount.

In some embodiments, the controlling unit is further configured, in response to detecting that the starting value of inventory supervision is less than a predetermined threshold, cancel supervision of the vendor server so that the vendor server directly sends the ex-warehousing instruction to the inventory server.

In a third aspect, an embodiment of the present disclosure provides an ex-warehousing control system including an order server, a vendor server, a control server, an inventory server, and a wallet server, wherein the order server is configured to generate a contract code in response to receiving an order including a purchaser identification and an order amount, and send the order and the contract code to the wallet server, and send the contract code to the control server; the wallet server is configured to obtain an account balance according to the purchaser identification in response to receiving the order, and generate a mapping relationship between inventory and the contract code in a case that the account balance is not less than the order amount; the order server is configured to issue an order request to the vendor server, wherein the order request includes the order amount, a platform identification, and an item identification; the vendor server is configured to send an ex-warehousing request including a vendor identification and the order request to the control server; the control server configured to perform the method of any implementation of the first aspect; the wallet server is configured to, in response to receiving a message querying a validity of the contract code, return a validity confirmation message in a case that there is the mapping relationship between the inventory and the contract code, and return a validity-disproved message in a case that there is no mapping relationship between the inventory and the contract code; and complete money deduction in response to receiving a money-deduction request; and; and the inventory server is configured to, in response to receiving an ex-warehousing instruction sent by the control server, perform ex-warehousing of items indicated by the ex-warehousing instruction.

According to a fourth aspect, an embodiment of the present disclosure provides an ex-warehousing control electronic device, including: one or more processors; and a storage apparatus, storing one or more programs thereon, where the one or more programs, when executed by the one or more processors, cause the one or more processors to implement the method of any of the first aspects.

In a fifth aspect, an embodiment of the present disclosure provides a computer readable medium storing a computer program thereon, where the program, when executed by a processor, implements the method of any of the first aspects.

In the method provided by the above embodiments of the present application, by means of virtual values of inventory items, the order-related ex-warehousing and wallet contract instructions, normal ex-warehousing of items at an unlimited platform is realized. That is, the items at the unlimited platform are not supervised. By means of virtual values of inventory items, the order-related ex-warehousing and wallet contract instructions, ex-warehousing interception of items at a limited platform is realized. That is, the items at the limited platform are supervised. In conclusion, a purpose of ensuring the safety of the supervised inventory without affecting the flow of the items is achieved.

### BRIEF DESCRIPTION OF THE DRAWINGS

Other features, objects, and advantages of the present disclosure will become more apparent by reading the detailed description of non-limiting embodiments made with reference to the following drawings:
FIG. 1 is an architectural diagram of an ex-warehousing control system of the present disclosure;
FIG. 2 is a flow chart of an ex-warehousing control method according to an embodiment of the present disclosure;
FIG. 3 is a schematic diagram of an application scenario of an ex-warehousing control system according to the present disclosure;
FIG. 4 is a schematic structural diagram of an ex-warehousing control apparatus according to an embodiment of the present disclosure; and
FIG. 5 is a schematic structural diagram of a computer system adapted for implementing an electronic device of an embodiment of the present disclosure.

### DETAILED DESCRIPTION OF EMBODIMENTS

The present disclosure is described in further detail below with reference to the accompanying drawings and examples. It is to be understood that the specific embodiments described herein are merely illustrative of the related invention and are not restrictive of the invention. It is also to be noted that, for ease of description, only parts related to the invention are shown in the drawings.

It is noted that the embodiments in the present disclosure and the features in the embodiments may be combined with each other without conflict. The present disclosure will now be described in detail with reference to the accompanying drawings and examples.

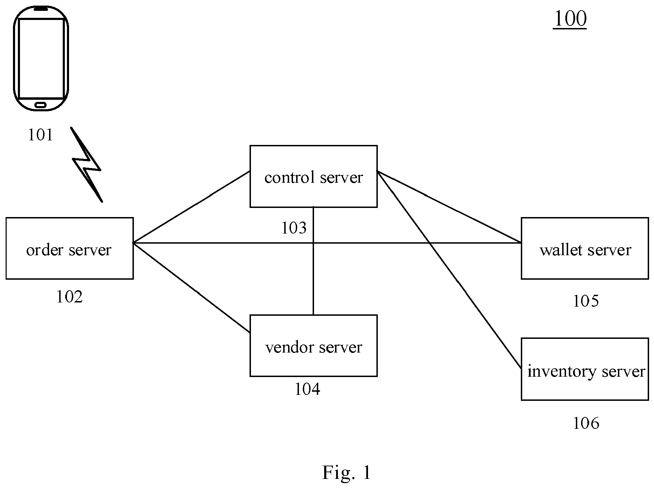

FIG. 1 illustrates an architecture diagram 100 of a system to which the EX-warehouse control of the present application may be applied.

As shown in FIG. 1, the ex-warehousing control system may include a terminal device 101, an order server 102, a control server 103, a vendor server 104, a wallet server 105, and an inventory server 106. The terminal device 101, the order server 102, the control server 103, the vendor server 104, the wallet server 105, and the inventory server 106 are connected through a wired or wireless network.

A user may interact with the order server 102 over the network using the terminal device 101 to receive or send messages or the like. Various communication client applications such as a web browser application, a shopping application, a search application, an instant messaging tool, a mailbox client, social platform software, and the like may be installed on the terminal devices 101, 102, 103.

The terminal device 101 may be hardware or software. When the terminal device 101 is hardware, it may be various electronic devices supporting a network shopping function, including but not limited to a smartphone, a tablet computer, an electronic book reader, an MP3 (Moving Picture Experts Group Audio Layer III) player, a MP4 (Moving Picture Experts Group Audio Layer IV) player, a laptop portable computer, a desktop computer, and the like. When the terminal devices 101, 102, and 103 are software, they may be installed in the electronic devices listed above. It may be implemented as a plurality of software or software modules (e.g., for providing distributed services) or as a single software or software module, which is not specifically limited herein.

The order server 102 receives an order sent by the terminal device 101, and the order may include information such as a purchaser identification, an item identification, an item quantity, an order amount, a platform identification, and the like. The platform identification refers to an identification of an item flow platform, and items of the same merchant (vendor) can flow at different item flow platforms. Items with different platform identifications are supervised differently. The platforms are divided into a limited platform and an unlimited platform. For items flowing at the limited platform, when a difference between a total inventory and the order amount is not less than a starting value of inventory supervision, items can be shipped out normally, and cannot be shipped out when the difference is less than the starting value. For items flowing at the unlimited platform, items can be shipped out normally regardless of the inventory, which relies on a money-deduction coordination logic with a contract wallet.

The control server 103 may receive a supervision request from the vendor, calculate the starting value of the inventory supervision and the total inventory, freeze the items in the inventory for supervision, and provide a loan to the vendor. If the vendor insolvency occurs, the vendor is allowed to sell the items to repay the loan in a case that money is deducted successfully when flowing at the unlimited platform. Automatic loan repayment after a successful money deduction of the wallet.

The vendor server 104 may request supervision to the control server 103. When an order is received, the order cannot be carried out directly, but it is necessary for the control server 103 to check whether insolvency occurs. Only when the control server 103 sends an ex-warehousing instruction after the checking, the inventory server 106 will be notified to ship out items involved in the order.

The wallet server 105 is used to determine whether money of the purchaser can be successfully deducted. If the vendor insolvency occurs, the vendor is allowed to sell the items to repay the loan in a case that money is deducted successfully when flowing at the unlimited platform. The control server 103 sends a money-deduction request to the wallet server 105. The control server 103 automatically performs repayments after the money is deducted successfully.

The inventory server 106 is controlled by the control server 103. Only when the ex-warehousing instruction, sent by the control server 103, is received, the items can be shipped out. The vendor server has no right to send the ex-warehousing instruction.

It should be noted that the ex-warehousing control method provided in the embodiments of the present disclosure is generally performed by the control server 103, and accordingly, the ex-warehousing control apparatus is generally provided in the control server 103.

It should be understood that the number of terminal devices, order servers, control servers, vendor servers, wallet servers, inventory servers in FIG. 1 is merely illustrative. There may be any number of terminal devices, order servers, control servers, vendor servers, wallet servers, and inventory servers as required for implementation.

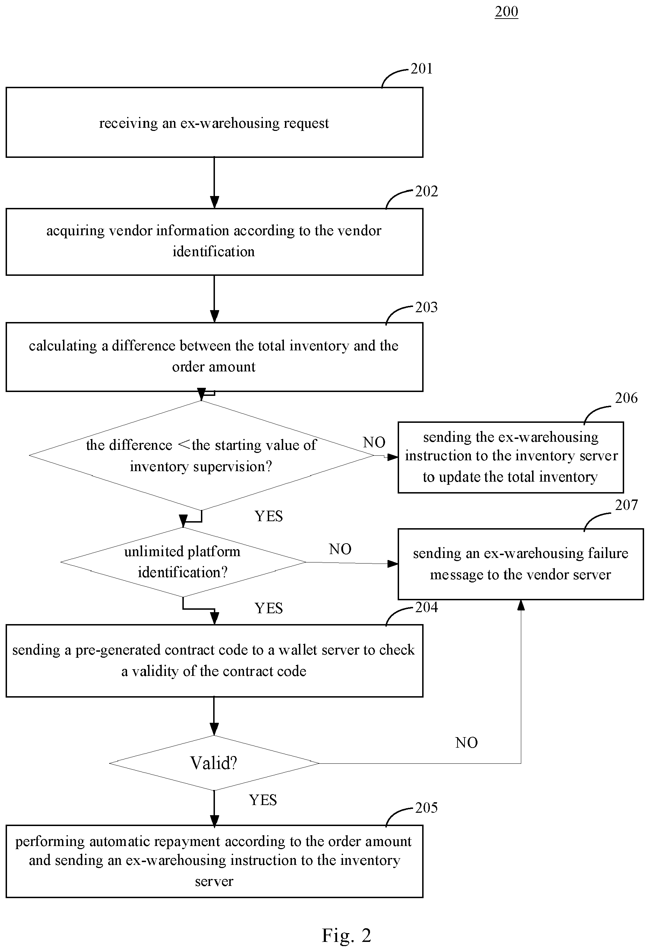

With continuing reference to FIG. 2, a flow 200 of an ex-warehousing control method according to an embodiment of the present application is shown. The ex-warehousing control method comprises step 201 to step 207.

Step 201, receiving an ex-warehousing request.

In the present embodiment, the execution body of the ex-warehousing control method (for example, the control server shown in FIG. 1) may receive an ex-warehousing request from the vendor server through a wired connection or a wireless connection. The ex-warehousing request includes a vendor identification, an order amount, and a platform identification. The seller identification is used to identify the vendor server. The order amount refers to a total amount which should be paid for items involved in the order. The platform identification refers to an identification of an item flow platform. A premise that the vendor server sends the ex-warehousing request to the control server is that the vendor server has sent a supervision request to the control server for loan. The supervision request includes a requested supervision amount. The control server then obtains, from the inventory server, a list of inventory items of the vendor requesting supervision, performs virtual realization on the inventory items to be supervised according to a preset realization price list to obtain an initial value of the total inventory. An initial value of the starting value of inventory supervision is then set according to a supervision amount. The supervision amount may be directly used as the initial value of the starting value of inventory supervision, or there may be a margin. For example, 1.1 times of the supervision amount is used as the starting value of inventory supervision.

Step 202, acquiring vendor information according to the vendor identification.

In the present embodiment, the seller information may include a starting value of inventory supervision, and a total inventory. The initial value of the starting value of inventory supervision and an initial value of the total inventory are calculated after the vendor is supervised. The starting value of inventory supervision and the total inventory are updated after the vendor repayment.

Step 203, in a case that a difference between the total inventory and the order amount is less than the starting value of inventory supervision, determining whether the platform identification is an unlimited platform identification.

In this embodiment, the difference between the total inventory and the order amount is a remaining total inventory after items are sold. If the difference between the total inventory and the order amount is less than the starting value of inventory supervision, it indicates that insolvency occurs. At this time, the vendor is not allowed to sell items directly, and it is necessary to further determine whether the vendor has a repayment capacity. Firstly, it is determined whether the platform identification in the current order is the unlimited platform identification or not. A list of unlimited platform identifications is set in advance, platforms in the list may be considered to be high-quality platforms, and items in orders at these platforms are allowed to be sold in a case that the items are supervised.

Step 204, in a case that the platform identification is the unlimited platform identification, sending a pre-generated contract code to a wallet server to check a validity of the contract code.

In the present embodiment, the contract code is generated by the order server and is sent to the wallet server and the control server without sending to the inventory server. After receiving the contract code, the wallet server generates a mapping relationship between the contract code and the inventory. The control server receives the order and the contract code, queries the wallet, and determines whether there is the mapping relationship between the contract code and the inventory.

Step 205, in response to receiving a validity confirmation message sent by the wallet server, performing automatic repayment according to the order amount and sending an ex-warehousing instruction to the inventory server.

In the present embodiment, if there is the mapping relationship between the contract code and the inventory in the wallet server, the validity confirmation message is sent to the control server. The control server notifies the wallet server to deduct money, and the deducted money amount is the order amount. After money is deducted successfully, the wallet server provides a feedback to the control server. The control server then notifies the inventory server to perform ex-warehousing. After the ex-warehousing is successful, the control server performs automatic repayment according to the order amount. The entire order amount may be used for the repayment or a certain proportion of the order amount may be used for the repayment. The starting value of inventory supervision may be updated after the repayment. For example, by subtracting the order amount from an original starting value of inventory supervision, a new starting value of inventory supervision is obtained. The total inventory may be updated after performing the ex-warehousing. For example, by subtracting the order amount from the total inventory, a new total inventory is obtained.

In some alternative implementations of the present embodiment, since prices of the items are varied, the total inventory cannot be updated directly by using the order amount. Rather, the latest realization price list is required to recalculate the prices of items of the inventory for using as the total inventory. The realization price list may be obtained by performing negotiation between the vendor and the lender.

In step 206, in a case that the difference between the total inventory and the order amount is not less than the starting value of inventory supervision, sending the ex-warehousing instruction to the inventory server to update the total inventory.

In the present embodiment, if no insolvency occurs, the ex-warehousing instruction may be directly sent to the inventory server. The wallet server normally deducts money. Since a quantity of inventory items becomes smaller after the ex-warehousing, the total inventory becomes smaller. It is necessary to calculate a realized value of items involved in the ex-warehousing instruction according to the item identification in the ex-warehousing instruction and the preset realization price list, and then the realized value is subtracted from an original total inventory to obtain the updated total inventory.

Step 207, in a case that the platform identification is the limited platform identification or a validity-disproved message sent by the wallet server is received, sending an ex-warehousing failure message to the vendor server.

In the present embodiment, if the insolvency occurs and the order comes from the limited platform, the ex-warehousing is not allowed, and the control server sends the ex-warehousing failure message to the vendor server. If the insolvency occurs, although the contract code is sent to the wallet server, the validity-disproved message sent by the wallet server is received, and the ex-warehousing failure message is sent to the vendor server. The order is refused and the ex-warehousing is not allowed. Subsequently, the order system notifies the terminal device to cancel the order.

In some alternative implementations of the present embodiment, the method further comprises: in response to receiving a repayment request including a repayment amount sent by the wallet server, updating the starting value of inventory supervision based on the repayment amount. In addition to perform repayment by flow of the items, the vendor may also perform a voluntary repayment by other means. In this approach, the inventory is not affected, so there is no need to update the total inventory, but it is necessary to update the starting value of inventory supervision. By subtracting the repayment amount from the original starting value of inventory supervision, the updated starting value of inventory supervision is obtained.

In some alternative implementations of the present embodiment, the method further comprises, in response to detecting that the starting value of inventory supervision is less than a predetermined threshold, canceling the supervision of the vendor server such that the vendor server directly sends an ex-warehousing instruction to the inventory server. The predetermined threshold may be zero, i.e., the paying up being performed. The predetermined threshold may also be of a small amount, i.e., allowing the vendor to overdraw by credit. After the supervision being cancelled, the vendor may voluntarily control the inventory server without the control server.

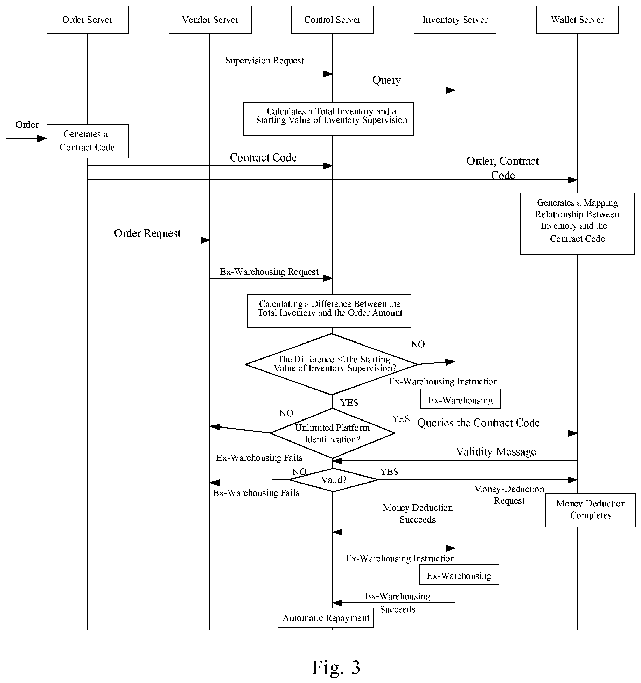

With continuing reference to FIG. 3, FIG. 3 is a schematic diagram of an application scenario of a method for ex-warehousing control according to the present embodiment. In the application scenario of FIG. 3, the vendor sends a supervision request to the control server through the vendor server, requesting supervision of inventory items for 800,000 loans or other equivalent items. The control server queries inventory information of the vendor in the inventory server, and calculates a total inventory of the vendor's inventory according to a realized price of the items as 1 million and a starting value of inventory supervision as 800,000.

A purchaser A sends an order x to the order system through a terminal device for purchasing items with a value of $100,000. The order system will generate a contract code m, which is sent to the control server and the wallet server. The wallet server binds the items with the value of $100,000 to the contract code m to generate a mapping relationship. The order server sends the order x to the vendor server. The vendor server, because of supervision, cannot directly perform ex-warehousing of the items, and therefore needs to send an ex-warehousing request to the control server. According to an order amount of 100,000, the control server calculates a total inventory to be 1,000,000-100,000=900,000, which is higher than the starting value of inventory supervision of 800,000. Therefore, the control server agrees the ex-warehousing, sends an inventory instruction to the inventory server, and updates the total inventory to 900,000.

A purchaser B sends an order y to the order system through a terminal device, for purchasing items with a value of 150,000. The order system generates a contract code n and sends the same to the control server and the wallet server. The wallet server binds the items with the value of 150,000 to the contract code n to generate a mapping relationship. The vendor server, because of supervision, cannot directly perform ex-warehousing of the items, and therefore needs to send an ex-warehousing request to the control server. According to an order amount of 150,000, the control server calculates a total inventory to be 900,000-150,000=750,000, which is less than the starting value of inventory supervision of 800,000. Therefore, the control server determines whether a platform of the order y is an unlimited platform. If the platform is an unlimited platform, the control server sends the contract code n to the wallet server. After receiving the contract code n, the wallet server queries whether there is a mapping relationship between the contract code n and items. If so, the wallet server sends a validity confirmation message to the control server so that the control server approves the ex-warehousing and requests the wallet server to deduct money. The control server notifies the inventory server that the items involved in the order can be shipped out after receiving a deduction success message. The control server performs automatic repayment and updates the starting value of inventory supervision and the total inventory. Otherwise, the wallet server sends a validity-disproved message to the control server. Therefore, the control server notifies the vendor server that the items cannot be shipped out, and the transaction fails. If the order y comes from a limited platform, the control server directly notifies the vendor server that the items cannot be shipped out, and the transaction fails without passing through the wallet server.

In the method provided by the above embodiments of the present application, by means of virtual values of inventory items, the order-related ex-warehousing and wallet contract instructions, normal ex-warehousing of items at an unlimited platform is realized. That is, the items at the unlimited platform are not supervised. By means of virtual values of inventory items, the order-related ex-warehousing and wallet contract instructions, ex-warehousing interception of items at a limited platform is realized. That is, the items at the limited platform are supervised. In conclusion, a purpose of ensuring the safety of the supervised inventory without affecting the flow of the items is achieved.

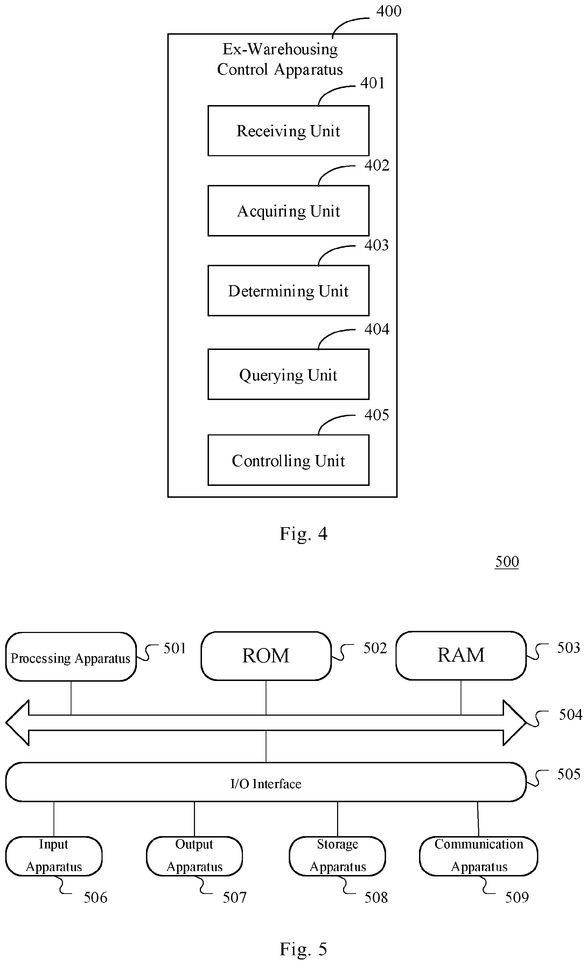

With further reference to FIG. 4, as an implementation of the method shown in each of the above figures, the present application provides an embodiment of an ex-warehousing control apparatus, which corresponds to the method embodiment shown in FIG. 2, and which is particularly applicable to various electronic devices.

As shown in FIG. 4, the ex-warehousing control apparatus 400 of the present embodiment includes a receiving unit 401, an acquiring unit 402, a determining unit 403, a querying unit 404, and a controlling unit 405. The receiving unit 401 is configured to receive an ex-warehousing request, wherein the ex-warehousing request includes a vendor identification, an order amount, and a platform identification. The acquiring unit 402 configured to acquire vendor information according to the vendor identification, wherein the vendor information includes a starting value of inventory supervision, and a total inventory. The determining unit 403 configured to, in a case that a difference between the total inventory and the order amount is less than the starting value of inventory supervision, determine whether the platform identification is an unlimited platform identification. The querying unit 404 is configured to, in a case that the platform identification is the unlimited platform identification, send a pre-generated contract code to a wallet server to check a validity of the contract code. The controlling unit 405 is configured, in response to receiving a validity confirmation message sent by the wallet server, perform automatic repayment according to the order amount and send an ex-warehousing instruction to the inventory server.

In this embodiment, the specific processing of the receiving unit 401, the acquiring unit 402, the determining unit 403, the querying unit 404, and the controlling unit 405 of the ex-warehousing control apparatus 600 may refer to step 201, step 202, step 203, step 204, and step 205 in the corresponding embodiment of FIG. 2.

In some alternative implementations of the present embodiment, the ex-warehousing request further comprises an item identification; and the controlling unit 405 is further configured to: calculate a realized value of items involved in the ex-warehousing request according to the item identification and a preset realized price list; send a money-deduction request to the wallet server; update the starting value of inventory supervision according to the order amount; and update the total inventory according to the realized value.

In some alternative implementations of the present embodiment, the controlling unit 405 is further configured to, in a case that the difference between the total inventory and the order amount is not less than the starting value of inventory supervision, send the ex-warehousing instruction to the inventory server to update the total inventory.

In some alternative implementations of the present embodiment, the controlling unit 405 is further configured to, in a case that the platform identification is the limited platform identification, send an ex-warehousing failure message to the vendor server.

In some alternative implementations of the present embodiment, the controlling unit 405 is further configured to, in response to receiving a validity-disproved message sent by the wallet server, send the ex-warehousing failure message to the vendor server.

In some alternative implementations of the present embodiment, the controlling unit 405 is further configured to, in response to receiving a repayment request including a repayment amount sent by the wallet server, update the starting value of inventory supervision according to the repayment amount.

In some alternative implementations of the present embodiment, the controlling unit 405 is configured to: receive a supervision request including a supervision amount from a vendor server; obtain an inventory item list from an inventory server; calculate an initial value of the total inventory according to a preset realization price list and the inventory item list; and set an initial value of the starting value of inventory supervision according to the supervision amount.

In some alternative implementations of the present embodiment, the controlling unit 405 is further configured to, in response to detecting that the starting value of inventory supervision is less than a predetermined threshold, cancel supervision of the vendor server so that the vendor server directly sends the ex-warehousing instruction to the inventory server.

Referring now to FIG. 5, there is shown a schematic structural diagram of an electronic device (e.g., a control server in FIG. 1) 500 suitable for implementing an embodiment of the present disclosure. The control server shown in FIG. 5 is merely an example and should not be construed as limiting the functionality and scope of use of the embodiments of the present disclosure.

As shown in Fig. 5, the electronic device 500 may include a processing apparatus 501 (e.g., a central processing unit or a graphics processing unit), which may execute various appropriate actions and processes in accordance with a program stored in a read only memory (ROM) 502 or a program loaded into a random-access memory (RAM) 503 from a storage apparatus 508. The RAM 503 further stores various programs and data required by operations of the electronic device 500. The processing apparatus 501, the ROM 502, and the RAM 503 are connected to each other through a bus 504. An input/output (I/O) interface 505 is also connected to the bus 504.

In general, the following apparatuses may be connected to the I/O interface 505: an input apparatus 506 including a touch screen, a touch pad, a keyboard, a mouse, a camera, a microphone, an accelerometer, a gyroscope, or the like; an output apparatus 507 including a liquid crystal display device (LCD), a speaker, a vibrator, or the like; a storage apparatus 508 including a magnetic tape, a hard disk, or the like; and a communication apparatus 509. The communication apparatus 509 may allow the electronic device 500 to exchange data with other devices through wireless or wired communication. While Fig. 5 shows the electronic device 500 having various apparatuses, it should be understood that it is not necessary to implement or provide all of the apparatuses shown in the figure. More or fewer apparatuses may be alternatively implemented or provided.

In particular, according to the embodiments of the present disclosure, the process described above with reference to the flow chart may be implemented as a computer software program. For example, the embodiments of the present disclosure include a computer program product, which includes a computer program that is tangibly embedded in a computer readable medium. The computer program includes a program code for executing the method as shown in the flow chart. In such an embodiment, the computer program may be downloaded and installed from a network via the communication apparatus 509, or be installed from the storage apparatus 508, or be installed from the ROM 502. The computer program, when executed by the processing apparatus 501, executes the functions as defined in the method of the embodiments of the present disclosure. It should be noted that the computer readable medium according to the present disclosure may be a computer readable signal medium or a computer readable storage medium, or any combination of the above two. An example of the computer readable storage medium may include, but is not limited to: electric, magnetic, optical, electromagnetic, infrared, or semiconductor systems, apparatuses, elements, or a combination of any of the above. A more specific example of the computer readable storage medium may include, but is not limited to: an electrical connection with one or more pieces of wire, a portable computer disk, a hard disk, a random-access memory (RAM), a read only memory (ROM), an erasable programmable read only memory (EPROM or flash memory), an optical fiber, a portable compact disk read only memory (CD-ROM), an optical memory, a magnetic memory, or any suitable combination of the above. In the present disclosure, the computer readable storage medium may be any tangible medium containing or storing programs which may be used by, or used in combination with, a command execution system, apparatus or element. In the present disclosure, the computer readable signal medium may include a data signal in the base band or propagating as parts of a carrier wave, in which computer readable program codes are carried. The propagating data signal may take various forms, including but not limited to an electromagnetic signal, an optical signal, or any suitable combination of the above. The computer readable signal medium may also be any computer readable medium except for the computer readable storage medium. The computer readable signal medium is capable of transmitting, propagating or transferring programs for use by, or use in combination with, a command execution system, apparatus or element. The program code contained on the computer readable medium may be transmitted with any suitable medium, including but not limited to: wire, an optical cable, a RF (radio frequency) medium etc., or any suitable combination of the above.

The computer readable medium may be included in the above electronic device; or may be a stand-alone computer readable medium without being assembled into the electronic device. The computer readable medium carries one or more programs, where the one or more programs, when executed by the electronic device, cause the electronic device to: receive an ex-warehousing request, wherein the ex-warehousing request includes a vendor identification, an order amount, and a platform identification; acquire vendor information according to the vendor identification, wherein the vendor information includes a starting value of inventory supervision, and a total inventory; in a case that a difference between the total inventory and the order amount is less than the starting value of inventory supervision, determine whether the platform identification is an unlimited platform identification; in a case that the platform identification is the unlimited platform identification, send a pre-generated contract code to a wallet server to check a validity of the contract code; and in response to receiving a validity confirmation message sent by the wallet server, perform automatic repayment according to the order amount and send an ex-warehousing instruction to the inventory server.

A computer program code for executing operations in the present disclosure may be compiled using one or more programming languages or combinations thereof. The programming languages include object-oriented programming languages, such as Java, Smalltalk or C++, and also include conventional procedural programming languages, such as "C" language, or similar programming languages. The program code may be completely executed on a user's computer, partially executed on a user's computer, executed as a separate software package, partially executed on a user's computer and partially executed on a remote computer, or completely executed on a remote computer or server. In the case where a remote computer is involved, the remote computer may be connected to a user computer through any kind of networks, including a local area network (LAN) or a wide area network (WAN), or may be connected to an external computer (for example, connected through the Internet using an Internet service provider).

The flow charts and block diagrams in the accompanying drawings illustrate architectures, functions and operations that may be implemented according to the systems, methods and computer program products of the various embodiments of the present disclosure. In this regard, each of the blocks in the flow charts or block diagrams may represent a module, a program segment, or a code portion, said module, program segment, or code portion including one or more executable instructions for implementing specified logic functions. It should also be noted that, in some alternative implementations, the functions denoted by the blocks may occur in a sequence different from the sequences shown in the figures. For example, any two blocks presented in succession may be executed substantially in parallel, or sometimes be executed in a reverse sequence, depending on the functions involved. It should also be noted that each block in the block diagrams and/or flow charts as well as a combination of blocks in the block diagrams and/or flow charts may be implemented using a dedicated hardware-based system executing specified functions or operations, or by a combination of dedicated hardware and computer instructions.

The units involved in the embodiments of the present disclosure may be implemented by software, or may be implemented by hardware. The described unit may also be provided in a processor, which may be described, for example, as a processor comprising a receiving unit, an acquiring unit, a determining unit, a querying unit, and a controlling unit. The names of the units do not constitute a limitation to such units themselves in some cases. For example, the first acquiring unit may be further described as "a unit configured to receiving an ex-warehousing request".

The above description only provides explanation of the preferred embodiments and the employed technical principles of the present disclosure. It should be appreciated by those skilled in the art that the scope of disclosure involved in the present disclosure is not limited to the technical solutions formed by the particular combinations of the above-described technical features, but should also cover other technical solutions formed by any combinations of the above-described technical features or equivalent features thereof without departing from the above-described concept of disclosure, for example, technical solutions formed by interchanging the above-described features with, but not limited to, technical features with similar functions disclosed in the present disclosure.

## Claims

1. An ex-warehousing control method comprising:
receiving an ex-warehousing request, wherein the ex-warehousing request includes a vendor identification, an order amount, and a platform identification;
acquiring vendor information according to the vendor identification, wherein the vendor information includes a starting value of inventory supervision, and a total inventory;
in a case that a difference between the total inventory and the order amount is less than the starting value of inventory supervision, determining whether the platform identification is an unlimited platform identification;
in a case that the platform identification is the unlimited platform identification, sending a pre-generated contract code to a wallet server to check a validity of the contract code; and
in response to receiving a validity confirmation message sent by the wallet server, performing automatic repayment according to the order amount and sending an ex-warehousing instruction to the inventory server.

2. The method of claim 1, wherein the ex-warehousing request further comprises an item identification; and
performing automatic repayment according to the order amount comprises:
calculating a realized value of items involved in the ex-warehousing request according to the item identification and a preset realized price list;
sending a money-deduction request to the wallet server;
updating the starting value of inventory supervision according to the order amount; and
updating the total inventory according to the realized value.

3. The method of any one of claims 1-2, wherein the method further comprises:
in a case that the difference between the total inventory and the order amount is not less than the starting value of inventory supervision, sending the ex-warehousing instruction to the inventory server to update the total inventory.

4. The method of any one of claims 1-3, wherein the method further comprises:
in a case that the platform identification is the limited platform identification, sending an ex-warehousing failure message to the vendor server.

5. The method of any one of claims 1-4, wherein the method further comprises:
in response to receiving a validity-disproved message sent by the wallet server, sending the ex-warehousing failure message to the vendor server.

6. The method of any one of claims 1-5, wherein the method further comprises:
in response to receiving a repayment request including a repayment amount sent by the wallet server, updating the starting value of inventory supervision according to the repayment amount.

7. The method of any one of claims 1-6, wherein before receiving the ex-warehousing request, the method further comprises:
receiving a supervision request including a supervision amount from a vendor server;
obtaining an inventory item list from an inventory server;
calculating an initial value of the total inventory according to a preset realization price list and the inventory item list; and
setting an initial value of the starting value of inventory supervision according to the supervision amount.

8. The method of claim 7, wherein the method further comprises:
in response to detecting that the starting value of inventory supervision is less than a predetermined threshold, cancelling supervision of the vendor server so that the vendor server directly sends the ex-warehousing instruction to the inventory server.

9. An ex-warehousing control apparatus comprising:
a receiving unit configured to receive an ex-warehousing request, wherein the ex-warehousing request includes a vendor identification, an order amount, and a platform identification;
an acquiring unit configured to acquire vendor information according to the vendor identification, wherein the vendor information includes a starting value of inventory supervision, and a total inventory;
a determining unit configured to, in a case that a difference between the total inventory and the order amount is less than the starting value of inventory supervision, determine whether the platform identification is an unlimited platform identification;
a querying unit configured to, in a case that the platform identification is the unlimited platform identification, send a pre-generated contract code to a wallet server to check a validity of the contract code; and
a controlling unit configured to, in response to receiving a validity confirmation message sent by the wallet server, perform automatic repayment according to the order amount and send an ex-warehousing instruction to the inventory server.

10. The apparatus of claim 9, wherein the ex-warehousing request further comprises an item identification; and the controlling unit is further configured to:
calculate a realized value of items involved in the ex-warehousing request according to the item identification and a preset realized price list;
send a money-deduction request to the wallet server;
update the starting value of inventory supervision according to the order amount; and
update the total inventory according to the realized value.

11. The apparatus according to any one of claims 9-10, wherein the controlling unit is further configured to:
in a case that the difference between the total inventory and the order amount is not less than the starting value of inventory supervision, send the ex-warehousing instruction to the inventory server to update the total inventory.

12. The apparatus according to any one of claims 9-11, wherein the controlling unit is further configured to:
in a case that the platform identification is the limited platform identification, send an ex-warehousing failure message to the vendor server.

13. The apparatus according to any one of claims 9-12, wherein the controlling unit is further configured to:
in response to receiving a validity-disproved message sent by the wallet server, send the ex-warehousing failure message to the vendor server.

14. The apparatus according to any one of claims 9-13, wherein the controlling unit is further configured to:
in response to receiving a repayment request including a repayment amount sent by the wallet server, update the starting value of inventory supervision according to the repayment amount.

15. The apparatus of any one of claims 9-14, wherein the controlling unit is further configured to:
receive a supervision request including a supervision amount from a vendor server;
obtain an inventory item list from an inventory server;
calculate an initial value of the total inventory according to a preset realization price list and the inventory item list; and
set an initial value of the starting value of inventory supervision according to the supervision amount.

16. The method according to any one of claims 9-15, wherein the controlling unit is further configured to:
in response to detecting that the starting value of inventory supervision is less than a predetermined threshold, cancel supervision of the vendor server so that the vendor server directly sends the ex-warehousing instruction to the inventory server.

17. An ex-warehousing control system comprising an order server, a vendor server, a control server, an inventory server, and a wallet server, wherein
the order server is configured to generate a contract code in response to receiving an order including a purchaser identification and an order amount, and send the order and the contract code to the wallet server, and send the contract code to the control server;
the wallet server is configured to obtain an account balance according to the purchaser identification in response to receiving the order, and generate a mapping relationship between inventory and the contract code in a case that the account balance is not less than the order amount;
the order server is configured to issue an order request to the vendor server, wherein the order request includes the order amount, a platform identification, and an item identification;
the vendor server is configured to send an ex-warehousing request including a vendor identification and the order request to the control server;
the control server configured to perform the method according to one of claims 1 to 5;
the wallet server is configured to, in response to receiving a message querying a validity of the contract code, return a validity confirmation message in a case that there is the mapping relationship between the inventory and the contract code, and return a validity-disproved message in a case that there is no mapping relationship between the inventory and the contract code; and complete money deduction in response to receiving a money-deduction request; and
the inventory server is configured to, in response to receiving an ex-warehousing instruction sent by the control server, perform ex-warehousing of items indicated by the ex-warehousing instruction.

18. An ex-warehousing control electronic device, comprising:
one or more processors; and
a storage apparatus, storing one or more programs thereon,
the one or more programs, when executed by the one or more processors, causing the one or more processors to implement the method as claimed in any one of claims 1 to 8.

19. A computer readable medium, storing a computer program thereon, wherein the program, when executed by a processor, implements the method of any one of claims 1-8.
